# EUROPEAN PATENT APPLICATION

(11) **EP 3 421 513 A1**
(43) Date of publication of application: **02.01.2019**
(21) Application number: 16907293.1
(22) Date of filing: 30.06.2016
(51) Int. Cl.: C08G 18/38

(54) **METHOD FOR PRODUCING CURED PRODUCT, CURED PRODUCT, AND EYEGLASS LENS SUBSTRATE**

(71) Applicant: Hoya Lens Thailand Ltd., Pathumthani 12130 (TH)
(72) Inventor: KAGEYAMA, Yukio, Tokyo 160-8347 (JP); KOUSAKA, Masahisa, Tokyo 160-8347 (JP); YAMAMOTO, Akinori, Tokyo 160-8347 (JP)
(74) Representative: Beckmann, Claus
(86) International application number: PCT/JP2016/069444
(87) International publication number: WO 2018/003060

(57) **Abstract**

Provided are: a method for producing a cured product, including a curable composition preparing step of preparing a curable composition containing a polyiso(thio)cyanate compound, a polythiol compound, and a curing catalyst having a water content of 5000 ppm or less on a mass basis, and a curing step of curing the curable composition to obtain a cured product; a cured product obtained by curing a curable composition containing a polyiso(thio)cyanate compound, a polythiol compound, and a curing catalyst having a water content of 5000 ppm or less on a mass basis; and an eyeglass lens substrate including the cured product.

## Description

### Technical Field

The present invention relates to a method for producing a cured product, a cured product, and an eyeglass lens substrate, and specifically to a method for producing a cured product obtained by curing a curable composition containing a polyiso(thio)cyanate compound and a polythiol compound, a cured product, and an eyeglass lens substrate.

### Background Art

By causing a curing reaction between a polyiso(thio)cyanate compound and a polythiol compound, a polythiourethane-based resin can be obtained (for example, refer to Patent Literature 1).

Patent Literature 1: WO 2008/047626 A1

### Summary of Invention

Examples of desired physical properties of the polythiourethane-based resin include excellent optical homogeneity. A polythiourethane-based resin having excellent optical homogeneity is useful as a material for various optical components such as an eyeglass lens. Examples of an index of optical homogeneity include striae and white turbidity as described in Patent Literature 1. It can be said that a polythiourethane-based resin has better optical homogeneity as occurrence of striae and white turbidity is further suppressed.

An aspect of the present invention provides a means for obtaining a polythiourethane-based resin useful as a material of an optical component. Specifically, an aspect of the present invention provides a means for obtaining a polythiourethane-based resin in which occurrence of striae and white turbidity are suppressed.

An aspect of the present invention relates to a method for producing a cured product, including:
a curable composition preparing step of preparing a curable composition containing a polyiso(thio)cyanate compound, a polythiol compound, and a curing catalyst having a water content of 5000 ppm or less on a mass basis (hereinafter also referred to simply as "water content"); and
a curing step of curing the curable composition to obtain a cured product.

In order to find a means for suppressing occurrence of striae and white turbidity in a cured product (polythiourethane-based resin) obtained by causing a curing reaction between a polyiso(thio)cyanate compound and a polythiol compound, the present inventors made intensive studies. As a result, the present inventors have obtained new findings which have not been known hitherto that water contained in a curing catalyst used to obtain the cured product affects occurrence of striae and white turbidity of a polythiourethane-based resin obtained by using this curing catalyst. The present inventors further made intensive studies based on such findings and as a result, have completed the method for producing a cured product according to an aspect of the present invention.

An aspect of the present invention can provide a cured product (polythiourethane-based resin) obtained by a curing reaction between a polyiso(thio)cyanate compound and a polythiol compound, suppressing occurrence of striae and white turbidity, and having excellent optical homogeneity.

### Description of Embodiments

An aspect of the present invention relates to the method for producing a cured product.

Furthermore, an aspect of the present invention also provides a cured product obtained by curing a curable composition containing a polyiso(thio)cyanate compound, a polythiol compound, and a curing catalyst having a water content of 5000 ppm or less on a mass basis, and an eyeglass lens substrate including the cured product.

Hereinafter, the method for producing a cured product, the cured product, and the eyeglass lens substrate will be described in more detail.

### [Curable composition preparing step]

The curable composition contains at least a polyiso(thio)cyanate compound, a polythiol compound, and a curing catalyst. The water content of the curing catalyst will be described later. In the present invention and the present specification, the "polyiso(thio)cyanate compound" is used to encompass a polyisocyanate compound and a polyisothiocyanate compound. Incidentally, isocyanate is sometimes referred to as isocyanate, and isothiocyanate is sometimes referred to as isothiocyanate. The "iso(thio)cyanate group" is used to encompass an isocyanate group (-N=C=O) and an isothiocyanate group (-N=C=S). The "polyiso(thio)cyanate compound" is a polyfunctional compound having two or more iso(thio)cyanate groups in one molecule. The "polythiol compound" is a polyfunctional compound having two or more thiol groups (-SH) in one molecule. By causing a curing reaction between a polyiso(thio)cyanate compound and a polythiol compound, an iso(thio)cyanate group included in the polyiso(thio)cyanate compound reacts with a thiol group included in the polythiol compound to obtain a reaction product having the following bond: 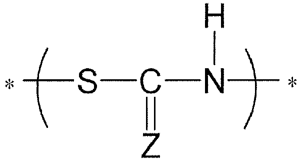 in a molecule. In the above, Z represents an oxygen atom or a sulfur atom. A reaction between the thiol group and the isocyanate group forms the bond in which Z is an oxygen atom. A reaction between the thiol group and the isothiocyanate group forms the bond in which Z is a sulfur atom. In the present invention and the present specification, a reaction product (resin) containing a plurality of the bonds in one molecule is referred to as "polythiourethane-based resin".

Regarding a cured product (polythiourethane-based resin) obtained by a curing reaction between a polyiso(thio)cyanate compound and a polythiol compound, Patent Literature 1 discloses that the water content of a curable composition containing these compounds (described as "water content of a polymerizable composition" in Patent Literature 1) is set within a specific range (refer to claim 1 of Patent Literature 1). However, Patent Literature 1 describes nothing about the water of a curing catalyst. Meanwhile, the present inventors made intensive studies. As a result, the present inventors have obtained new findings which have not been known hitherto that water contained in a curing catalyst largely affects occurrence of striae and white turbidity of a polythiourethane-based resin, and have found the method for producing a cured product according to an aspect of the present invention. The water content of a curing catalyst used in the method for producing a cured product is 5000 ppm or less. The water content is preferably 4800 ppm or less, more preferably 4500 ppm or less, still more preferably 4000 ppm or less, further still more preferably 3500 ppm or less, further still more preferably 3000 ppm or less, further still more preferably 2500 ppmpm or less, further still more preferably 2000 ppm or less, further still more preferably 1500 ppm or less, further still more preferably 1000 ppm or less, further still more preferably 500 ppm or less, further still more preferably 300 ppm or less, and further still more preferably 200 ppm or less from a viewpoint of further suppressing occurrence of striae and white turbidity. The water content of the curing catalyst can be, for example, 50 ppm or more or 100 ppm or more. However, a lower water content is more preferable for suppressing occurrence of striae and white turbidity in a polythiourethane-based resin. Therefore, the water content may be lower than the lower limit exemplified above.

The water content of the curing catalyst in the present invention and the present specification is a value measured by a Karl Fisher method under an environment of a temperature of 20 to 25°C and absolute humidity of 2 to 5 g/m³ without using a water vaporizer. The water content measurement by the Karl Fischer method may be performed by a coulometric titration method or a volume titration method.

As a method for reducing the water content of the curing catalyst, a volatilization method by heating, a vacuum degassing method, drying with a desiccant such as silica gel, and the like can be used singly or in combination of two or more methods thereof. As a result, a curing catalyst having a water content of 5000 ppm or less can be obtained. Details of the curing catalyst will be described later.

Next, various components contained in the curable composition will be described in more detail.

### (Curing catalyst)

As the curing catalyst, various known curing catalysts capable of exhibiting a catalytic action on a curing reaction between a polyiso(thio)cyanate compound and a polythiol compound can be used. Examples of such a curing catalyst include an organic tin compound. The organic tin compound is an organic compound containing a tin atom (Sn), and examples thereof include an organic tin halide compound. The organic tin halide compound is an organic compound containing a halogen atom and a tin atom. Specific examples of the organic tin halide compound include a compound represented by the following general formula (I):

(R)ₐ-Sn-X₍₄₋ₐ₎ (I).

In the general formula (I), R represents a hydrocarbon group having 1 to 12 carbon atoms, X represents a halogen atom, and a represents an integer of 1 to 3.

The hydrocarbon group having 1 to 12 carbon atoms, represented by R, may be a saturated hydrocarbon group or an unsaturated hydrocarbon group, may be linear or branched, and may have a cyclic structure. The hydrocarbon group having 1 to 12 carbon atoms, represented by R, is preferably an alkyl group. An organic tin halide compound having an alkyl group is referred to as an alkyltin halide compound. The alkyl group is preferably an alkyl group having 1 to 4 carbon atoms. The alkyl group may have a substituent, or does not have to have a substituent. Examples of the substituent include a carboxy group, a hydroxy group, an amino group, a nitro group, and a cyano group, but are not limited thereto. The alkyl group represented by R is preferably an unsubstituted alkyl group. The alkyl group represented by R is preferably a methyl group, an ethyl group, a propyl group, or a butyl group. Incidentally, regarding an alkyl group having a substituent, the number of carbon atoms refers to the number of carbon atoms except for the substituent.

Examples of the halogen atom represented by X include a fluorine atom, a chlorine atom, and a bromine atom.
a is an integer of 1 to 3. In a case where a is 2 or 3, two or three Rs in general formula (I) may be the same alkyl group or different alkyl groups. In a case where a is 1 or 2, three or two Xs in general formula (I) may be the same halogen atom or different halogen atoms.

Specific examples of the organic tin halide compound include various alkyltin halide compounds such as monomethyltin trichloride, dimethyltin dichloride, trimethyltin chloride, dibutyltin dichloride, tributyltin chloride, tributyltin fluoride, and dimethyltin dibromide.

### (Polyiso(thio)cyanate compound)

As the polyiso(thio)cyanate compound, various polyiso(thio)cyanate compounds such as an aliphatic polyiso(thio)cyanate compound, an alicyclic polyiso(thio)cyanate compound, and an aromatic polyiso(thio)cyanate compound can be used. The number of iso(thio)cyanate groups contained in one molecule of the polyiso(thio)cyanate compound is 2 or more, preferably 2 to 4, and more preferably 2 or 3. Specific examples of the polyiso(thio)cyanate compound include various compounds exemplified as a polyiso(thio)cyanate compound in paragraph 0052 of JP 5319037 B2. Preferable examples of the polyiso(thio)cyanate compound include: an aliphatic polyisocyanate compound such as hexamethylene diisocyanate, 1,5-pentane diisocyanate, isophorone diisocyanate, bis(isocyanatomethyl)cyclohexane, dicyclohexylmethane diisocyanate, 2,5-bis(isocyanatomethyl)-bicyclo [2.2.1]heptane, 2,6-bis(isocyanatomethyl)-bicyclo [2.2.1]heptane, bis(4-isocyanatocyclohexyl)methane, 1,3-bis(isocyanatomethyl)cyclohexane, or 1,4-bis(isocyanatomethyl)cyclohexane; and an aromatic polyisocyanate compound such as bis(isocyanatomethyl) benzene, m-xylylene diisocyanate, p-xylylene diisocyanate, 1,3-diisocyanatobenzene, tolylene diisocyanate, 2,4-diisocyanatotoluene, 2,6-diisocyanatotoluene, or 4,4'-methylenebis(phenyl isocyanate). Furthermore, a halogen substitution product of the polyiso(thio)cyanate compound such as a chlorine substitution product thereof or a bromine substitution product thereof, an alkyl substitution product thereof, an alkoxy substitution product thereof, a nitro substitution product thereof, a prepolymer type modified product thereof with a polyhydric alcohol, a carbodiimide modified product thereof, a urea modified product thereof, a biuret modified product thereof, a dimerization or trimerization reaction product thereof, and the like can be used. These compounds may be used singly or in combination of two or more kinds thereof.

### (Polythiol compound)

As the polythiol compound, various polythiol compounds such as an aliphatic polythiol compound and an aromatic polythiol compound can be used. The number of thiol groups contained in one molecule of the polythiol compound is 2 or more, preferably 2 to 6, and more preferably 2 to 4. Specific examples of the polythiol compound include various polythiol compounds exemplified in paragraphs 0035 to 0044 of WO 2008/047626 A1. Preferable examples of the polythiol compound include bis(mercaptomethyl)-3,6,9,-trithia-undecanedithiol, 2,3-bismercaptoethylthio-1-mercaptopropane, bismercaptomethyldithian, pentaerythritol-tetrakismercapto acetate, pentaerythritol-tetrakismercapto propionate, trimethylolpropane trismercapto acetate, and trimethylolpropane trismercapto propionate. These compounds may be used singly or in combination of two or more kinds thereof.

At the time of preparing the curable composition, one or more components other than the components described above may be mixed. For such other components, for example, refer to paragraphs 0055, 0057, and 0058 to 0064 of JP 5319037 B2. In addition, it is also possible to use one or more additives commercially available generally as additives for various resins such as a polythiourethane-based resin. The curable composition can be prepared by sequentially mixing the above-described various components at the same time or in any order. A specific aspect of preparing a curable composition will be described below, but the present invention is not limited to the following aspect.

### (Specific aspect of preparing curable composition)

A specific aspect of preparing a curable composition includes a step of mixing a polyiso(thio)cyanate compound with a curing catalyst having a water content of 5000 ppm or less to prepare a mixture (hereinafter also referred to as "step 1") and a step of mixing the prepared mixture with a polythiol compound (hereinafter also referred to as "step 2"). Preferably, a polyiso(thio)cyanate compound is mixed with the curing catalyst before mixing the polyiso(thio)cyanate compound with a polythiol compound. That is, preferably, the mixture does not contain a polythiol compound. Here, "a polythiol compound is not contained" means that a polythiol compound is not actively added. It is allowed that a polythiol compound is unintentionally mixed as impurities. It is preferable to mix a polyiso(thio)cyanate compound with a curing catalyst before mixing the polyiso(thio)cyanate compound with a polythiol compound in order to obtain a cured product with less optical distortion. However, the present inventors consider that mixing a polyiso(thio)cyanate compound with a curing catalyst before mixing the polyiso(thio)cyanate compound with a polythiol compound tends to cause striae and white turbidity significantly in a cured product obtained by a curing reaction unless a curing catalyst having a water content of 5000 ppm or less is used. Details are as follows.

An iso(thio)cyanate group included in the polyiso(thio)cyanate compound reacts with a thiol group to form the bond illustrated above, but can also react with water. For example, an isocyanate group (-NCO) is converted into -NHCOOH by a reaction with water and becomes -NH₂ by decarbonation of -NHCOOH. That is, an amine is generated by the reaction with water. Furthermore, a reaction of this amine with an isocyanate group forms a urea bond. That is, a urea compound is generated. A similar reaction can also occur for an isothiocyanate group. The present inventors consider that an amine or the like generated in this way is one of causes for occurrence of striae, and a urea compound or the like is one of causes for occurrence of white turbidity. Specifically, the present inventors consider that an influence of an amine or the like on a reaction rate (polymerization rate) of a curing reaction is one of causes for occurrence of striae. Furthermore, the present inventors consider that poor solubility of a urea compound or the like in a polyiso(thio)cyanate compound and a polythiol compound contained in a curable composition is one of causes for occurrence of white turbidity. However, meanwhile, an iso(thio)cyanate compound has high reactivity with a thiol group included in a polythiol compound. Therefore, in a case where a reaction system containing a polyiso(thio)cyanate compound and a polythiol compound contains water, it is considered that an iso(thio)cyanate group mainly reacts with a thiol group. Therefore, it is presumed that striae and white turbidity caused by an amine or the like and a urea compound or the like due to a reaction between an iso(thio)cyanate group and water are less likely to occur than in a reaction system not containing a polythiol compound. Meanwhile, mixing a polyiso(thio)cyanate compound with a curing catalyst before mixing the polyiso(thio)cyanate compound with a polythiol compound makes an influence of water contained in the curing catalyst obvious. As a result it is considered that striae and white turbidity significantly occur in a cured product obtained by a curing reaction. Meanwhile, according to the method for producing a cured product according to an aspect of the present invention, by using a curing catalyst having a water content of 5000 ppm or less as a curing catalyst, occurrence of striae and white turbidity in a cured product can be suppressed.

Note that the specific aspect includes the step of mixing a polyiso(thio)cyanate compound with a curing catalyst having a water content of 5000 ppm or less to prepare a mixture (step 1) and the step of mixing the prepared mixture with a polythiol compound (step 2). In step 2, a polyiso(thio)cyanate compound can be further mixed. That is, the whole amount of a polyiso(thio)cyanate compound used for preparing a curable composition may be mixed in step 1, or a part thereof may be mixed in step 1 and another part may be mixed in step 2. The whole amount or a part of the other various components may be mixed in step 1 and/or step 2, or in steps before and after steps 1 and 2.

### (Mixing ratios and contents of various components)

A mixing ratio between the polythiol compound and the polyiso(thio)cyanate compound in the curable composition is not particularly limited, but for example, as a molar ratio, a ratio of thiol group contained in the polythiol compound/iso(thio)cyanate group contained in the polyiso(thio)cyanate compound may be 0.5 to 3.0, preferably 0.8 to 1.4, and more preferably 0.9 to 1.1. The mixing ratio within the range is preferable for obtaining a curable composition capable of providing a cured product having various excellent physical properties such as high refractive index and high heat resistance. Meanwhile, the amount of the curing catalyst may be, for example, 10 to 10,000 ppm, and is preferably 50 to 8,000 ppm with respect to the whole amount of a curable compound. Note that the "ppm" described here is on a mass basis. In the specific aspect, in step 1, for example, 0.005 to 10 parts by mass of the curing catalyst can be mixed with 100 parts by mass of a polyiso(thio)cyanate compound. As the curing catalyst, one or more curing catalysts can be used. In a case where two or more curing catalysts are used, the amount of the curing catalysts means the total content of the two or more curing catalysts. In the present invention and the present specification, components that can have different structures may be used singly or in combination of two or more kinds thereof unless otherwise specified. In a case where such two or more components are used, the content means the total content of the two or more components.

### [Curing step]

By curing a curable composition prepared in the above-described curable composition preparing step, a polythiourethane-based resin useful as a material of an optical component such as an eyeglass lens can be obtained as a cured product. By using a curing catalyst having a water content of 5000 ppm or less as a curing catalyst, occurrence of striae and white turbidity in a cured product obtained by a curing reaction can be suppressed.

The curable composition can be cured by various curing treatments capable of curing the curable composition. For example, cast polymerization is preferable for producing a cured product (also referred to as "plastic lens") having a lens shape. In cast polymerization, a curable composition is injected into a cavity of a molding die having two molds facing each other with a predetermined gap and a cavity formed by closing the gap, and the curable composition is polymerized (curing reaction) in the cavity to obtain a cured product. For details of a molding die usable for cast polymerization, for example, refer to paragraphs 0012 to 0014 and FIG. 1 of JP 2009-262480 A. Note that the publication describes a molding die in which the gap between the two molds is closed with a gasket as a sealing member, but a tape can also be used as the sealing member.

In an aspect, cast polymerization can be performed as follows. A curable composition is injected into a molding die cavity from an injection port formed on a side surface of the molding die (injection step). After the injection, by polymerizing the curable composition (curing reaction) preferably by heating, the curable composition is cured to obtain a cured product having an internal shape of the cavity transferred thereon (curing step). A polymerization condition is not particularly limited, and can be appropriately set depending on the composition of a curable composition or the like. As an example, a molding die having a curable composition injected into a cavity can be heated at a heating temperature of 20 to 150°C for about 1 to 72 hours, but the polymerization condition is not limited thereto. In the present invention and the present specification, the temperature such as a heating temperature for cast polymerization refers to a temperature of an atmosphere in which a molding die is placed. In addition, it is possible to raise the temperature at an arbitrary temperature rising rate during heating, and to lower the temperature (cooling) at an arbitrary temperature falling rate. After completion of the polymerization (curing reaction), the cured product inside the cavity is released from the molding die. The cured product can be released from the molding die by removing the upper and lower molds forming the cavity and a gasket or a tape in an arbitrary order as usually performed in cast polymerization. The cured product released from the molding die can be used preferably as a lens substrate of an eyeglass lens. Note that the cured product used as a lens substrate of an eyeglass lens can be usually subjected to a post-step such as annealing, a grinding step such as a rounding step, a polishing step, or a step of forming a coat layer such as a primer coat layer for improving impact resistance or a hard coat layer for improving surface hardness after releasing. Furthermore, various functional layers such as an antireflection layer and a water-repellent layer can be formed on the lens substrate. A known technique can be applied to any of these steps without any limitation. In this way, an eyeglass lens in which a lens substrate is the cured product can be obtained. Furthermore, by attaching this eyeglass lens to a frame, eyeglasses can be obtained.

### Examples

Next, the present invention will be described in more detail with Examples, but the present invention is not limited to aspects indicated by Examples. Operation and evaluation described below were performed in air at room temperature (about 20 to 25°C) unless otherwise specified. In addition, % and parts described below are on a mass basis unless otherwise specified.

### [Measurement of water content of curing catalyst]

The water content of a curing catalyst used for preparing a curable composition in each of Examples and Comparative Examples was measured under an environment of a temperature of 20 to 25°C and absolute humidity of 2 to 5 g/m³ using a Karl Fischer water content measuring apparatus (automatic water content measuring apparatus MKC-610 type manufactured by Kyoto Electronics Manufacturing Co., Ltd.). MKC-610 type was used as an automatic water content measuring apparatus. The curing catalyst used in each of Examples is a curing catalyst in which the water content is reduced by vacuum degassing.

After the water content was measured, a curable composition was prepared within one hour. From the measurement of the water content to the preparation of the curable composition, the water content of the curing catalyst does not change, or even if the water content changes, the amount of change is equal to or lower than a detection limit. In a normal work environment or storage environment, the water content of the curing catalyst does not change, or even if the water content changes, the amount of change is equal to or lower than a detection limit.

### [Example 1]

### (Curable composition preparing step)

50.6 parts of xylylene diisocyanate, 0.010 parts of dimethyltin dichloride having the water content illustrated in Table 1 as a curing catalyst, 0.10 parts of acidic phosphate (JP-506H manufactured by Johoku Chemical Co., Ltd.) as a releasing agent, and 0.50 parts of ultraviolet absorber (Seesorb 701 manufactured by Shipro Kasei Kaisha, Ltd.) were mixed and dissolved. Furthermore, 49.4 parts of bis(mercaptomethyl)-3,6,9-trithia-undecanedithiol was added and mixed to prepare a mixture. This mixture was defoamed at 200 Pa for one hour, and then the resulting mixture was filtered with a polytetrafluoroethylene (PTFE) filter having a pore diameter of 5.0 µm.

### (Injection step)

The mixture (curable composition) after filtration was injected into a lens molding die including a glass mold having a diameter of 75 mm and -4.00 D and a tape.

### (Curing step and annealing)

The molding die was put into an electric furnace. The temperature was gradually raised from 15°C to 120°C over 20 hours, and was kept for two hours for polymerization (curing reaction). After completion of the polymerization, the molding die was taken out from the electric furnace, and the resulting product was released from the molding die to obtain a cured product (polythiourethane-based resin plastic lens). The obtained plastic lens was further annealed for three hours in an annealing furnace having a furnace temperature of 120°C.

### [Example 2 and Comparative Examples 1 and 2]

A cured product was obtained in a similar manner to Example 1 except that dimethyltin dichloride having the water content illustrated in Table 1 was used.

### [Example 3]

A cured product was obtained in a similar manner to Example 1 except that 0.012 parts of dibutyltin dichloride having the water content illustrated in Table 1 was used in place of 0.010 parts of dimethyltin dichloride as a curing catalyst.

### [Comparative Example 3]

A cured product was obtained in a similar manner to Example 2 except that dibutyltin dichloride having the water content illustrated in Table 1 was used.

### [Example 4]

A cured product was obtained in a similar manner to Example 1 except that 50.6 parts of xylylene diisocyanate was changed to 47.6 parts of bisisocyanatomethyl cyclohexane, the amount of the curing catalyst (dimethyltin dichloride) was changed to 0.40 parts, and bis(mercaptomethyl)-3,6,9-trithia-undecanedithiol was changed to a mixture of 26.2 parts of bismercaptomethyldithian and 26.2 parts of pentaerythritol tetrakis mercaptoacetate.

### [Example 5 and Comparative Example 4]

A cured product was obtained in a similar manner to Example 2 except that dimethyltin dichloride having the water content illustrated in Table 1 was used.

### [Example 6]

A cured product was obtained in a similar manner to Example 1 except that 50.6 parts of xylylene diisocyanate was changed to 50.3 parts of bisisocyanatomethyl bicycloheptane, the amount of the curing catalyst (dimethyltin dichloride) was changed to 0.050 parts, and bis(mercaptomethyl)-3,6,9-trithia-undecanedithiol was changed to a mixture of 24.2 parts of bismercaptoethyl thiomercaptopropane and 25.5 parts of pentaerythritol tetrakis mercaptopropionate.

### [Example 7 and Comparative Example 5]

A cured product was obtained in a similar manner to Example 6 except that dimethyltin dichloride having the water content illustrated in Table 1 was used.

### [Example 8]

A cured product was obtained in a similar manner to Example 6 except that 0.060 parts of dibutyltin dichloride having the water content illustrated in Table 1 was used in place of 0.050 parts of dimethyltin dichloride as a curing catalyst.

### [Evaluation of striae and white turbidity]

The cured products (polythiourethane-based resin plastic lenses) obtained in the Examples and Comparative Examples were evaluated as follows. If a cured product is evaluated to be B or more, the cured product can be judged to be excellent in optical homogeneity and suitable as an eyeglass lens substrate.

### (Evaluation of striae)

The plastic lenses were subjected to a projection test using an appearance inspection apparatus Optical Modulex SX-UI251HQ manufactured by Ushio Inc. As a highpressure ultraviolet (UV) lamp of a light source, a white screen was disposed at a position of 1 m from the light source using USH-102D manufactured by Ushio Inc. A plastic lens to be evaluated was inserted between the light source and the screen, and a projected image on the screen was visually observed and judged according to the following criteria.
A⁺: No linear defect is confirmed in a projected image.
A: A very light linear defect is confirmed in a projected image.
B: A light linear defect is confirmed in a projected image.
C: A dense linear defect is confirmed in a projected image.
D: A marked linear defect is confirmed in a projected image.

### (Evaluation of white turbidity)

The plastic lenses were visually observed under a fluorescent lamp in a dark box, and judged according to the following criteria.
A⁺: No white turbidity is confirmed in a plastic lens.
A: Very light white turbidity is confirmed in a plastic lens.
B: Light white turbidity is confirmed in a plastic lens.
C: Dense white turbidity is confirmed in a plastic lens.
D: Marked white turbidity is confirmed in a plastic lens.

Results for the above measurement are illustrated in Table 1. From the results illustrated in Table 1, it can be confirmed that use of a curing catalyst having a water content of 5000 ppm or less has achieved suppression of occurrence of striae of a cured product (polythiourethane-based resin plastic lens) and white turbidity thereof.

**[Table 1]**

| | Water content of curing catalyst | Evaluation result of striae | Evaluation result of white turbidity |
|---|---|---|---|
| Example 1 | 4800 ppm | B | B |
| Example 2 | 160 ppm | A | A |
| Comparative Example 1 | 5600 ppm | C | C |
| Comparative Example 2 | 9600 ppm | D | D |
| Example 3 | 4600 ppm | A | A |
| Comparative Example 3 | 5400 ppm | C | C |
| Example 4 | 3000 ppm | A | A |
| Example 5 | 160 ppm | A⁺ | A⁺ |
| Comparative Example 4 | 5600 ppm | C | C |
| Example 6 | 4800 ppm | A | A |
| Example 7 | 160 ppm | A⁺ | A⁺ |
| Comparative Example 5 | 5600 ppm | C | C |
| Example 8 | 4600 ppm | A | A |

Finally, the above-described aspects will be summarized.

An aspect can provide a method for producing a cured product, including: a curable composition preparing step of preparing a curable composition containing a polyiso(thio)cyanate compound, a polythiol compound, and a curing catalyst having a water content of 5000 ppm or less on a mass basis; and a curing step of curing the curable composition to obtain a cured product.

According to the method for producing a cured product, by using a curing catalyst having a water content of 5000 ppm or less on a mass basis, it is possible to suppress occurrence of striae and white turbidity in a cured product (polythiourethane-based resin) obtained by a curing reaction between a polyiso(thio)cyanate compound and a polythiol compound.

In an aspect, the curable composition preparing step includes a step of mixing a polyiso(thio)cyanate compound with the curing catalyst to prepare a mixture, and a step of mixing the prepared mixture with a polythiol compound.

In an aspect, the curing catalyst is an organic tin compound.

In an aspect, the curing step is performed by subjecting the curable composition to cast polymerization.

In an aspect, the cured product is an eyeglass lens substrate.

Another aspect provides a cured product obtained by curing a curable composition containing a polyiso(thio)cyanate compound, a polythiol compound, and a curing catalyst having a water content of 5000 ppm or less on a mass basis.

The cured product can exhibit excellent optical homogeneity (specifically, less striae and white turbidity).

Another aspect provides an eyeglass lens substrate including the cured product.

The embodiment disclosed here is exemplary in all respects, and it should be considered that the embodiment is not restrictive. The scope of the present invention is defined not by the above description but by claims, and intends to include all modifications within meaning and a scope equal to claims.

An aspect of the present invention is useful in the field of producing various kinds of optical components such as an eyeglass lens.

## Claims

1. A method for producing a cured product, comprising:
a curable composition preparing step of preparing a curable composition containing a polyiso(thio)cyanate compound, a polythiol compound, and a curing catalyst having a water content of 5000 ppm or less on a mass basis; and
a curing step of curing the curable composition to obtain a cured product.

2. The method for producing a cured product according to claim 1, wherein
the curable composition preparing step includes:
a step of mixing a polyiso(thio)cyanate compound with the curing catalyst to prepare a mixture; and
a step of mixing the prepared mixture with a polythiol compound.

3. The method for producing a cured product according to claim 1 or 2, wherein the curing catalyst is an organic tin compound.

4. The method for producing a cured product according to any one of claims 1 to 3, wherein the curing step is performed by subjecting the curable composition to cast polymerization.

5. The method for producing a cured product according to any one of claims 1 to 4, wherein the cured product is an eyeglass lens substrate.

6. A cured product obtained by curing a curable composition containing a polyiso(thio)cyanate compound, a polythiol compound, and a curing catalyst having a water content of 5000 ppm or less on a mass basis.

7. An eyeglass lens substrate comprising the cured product according to claim 6.
